# EUROPEAN PATENT SPECIFICATION

(11) **EP 4 697 073 B1**
(45) Date of publication and mention of the grant of the patent: **22.07.2026**
(21) Application number: 25720232.5
(22) Date of filing: 13.01.2025
(51) Int. Cl.: G02B 6/44, G02B 6/48

(54) **PHOTOELECTRIC ISOLATION DEVICE AND PHOTOELECTRIC ISOLATION SPLICING SYSTEM FOR OPTICAL FIBER COMPOSITE OVERHEAD GROUND WIRE**
PHOTOELEKTRISCHE ISOLATIONSVORRICHTUNG UND PHOTOELEKTRISCHES ISOLATIONSSPLEISSSYSTEM FÜR EINEN OPTISCHEN FASERVERBUNDSTOFF-FREILAUFMASSEDRAHT
DISPOSITIF D'ISOLATION PHOTOÉLECTRIQUE ET SYSTÈME D'ÉPISSAGE D'ISOLATION PHOTOÉLECTRIQUE POUR FIL DE TERRE AÉRIEN COMPOSITE À FIBRE OPTIQUE

(30) Priority: 19.06.2024 CN 202410790146
(43) Date of publication of application: 18.02.2026
(73) Proprietor: Jiang Dong Fittings Equipment Co., Ltd., Nantong, Jiangsu 226463 (CN); Jiangsu Zhongtian Technology Co., Ltd., Nantong, Jiangsu 226463 (CN)
(72) Inventor: YE, Weiqing, Nantong, Jiangsu 226463 (CN); FU, Rong, Nantong, Jiangsu 226463 (CN); LI, Xinxin, Nantong, Jiangsu 226463 (CN); MAO, Xinguo, Nantong, Jiangsu 226463 (CN); NI, Jian, Nantong, Jiangsu 226463 (CN); ZHAI, Qinghua, Nantong, Jiangsu 226463 (CN); WANG, Jingjing, Nantong, Jiangsu 226463 (CN); YE, Peng, Nantong, Jiangsu 226463 (CN)
(74) Representative: Boult Wade Tennant LLP
(86) International application number: PCT/CN2025/072050
(87) International publication number: WO 2025/260729

(56) References cited:
- WO-A1-2015/103913
- CN-A- 102 033 279
- CN-A- 102 393 554
- CN-A- 114 488 452
- CN-A- 117 706 711
- CN-A- 117 831 866
- CN-A- 118 363 128
- CN-Y- 201 229 426
- JP-A- H0 556 544

## Description

This application claims priority to Chinese Patent Application No. 202410790146.4, titled "Optoelectrical separation apparatus and optoelectrical separation splicing system for optical fiber composite overhead ground wires" and filed on June 19, 2024.

### TECHNICAL FIELD

The present application relates to an optoelectrical separation apparatus and optoelectrical separation splicing system for optical fiber composite overhead ground wires.

### BACKGROUND

OPGW (optical fiber composite overhead ground wire) optical fiber cables are generally grounded tower by tower in overhead lines, and the matching OPGW splice boxes are also in a grounded state. With the requirements for energy-saving of overhead transmission line ground wires and the need for OPGW de-icing, OPGW needs to undergo insulation modification and adopt a segmented insulation method. Each insulated segment of OPGW requires the installation of an optoelectrical separation apparatus, which is designed to achieve insulation between the OPGW optical fiber cables and the optical fiber cables while ensuring splicing and protection of an optical fiber.

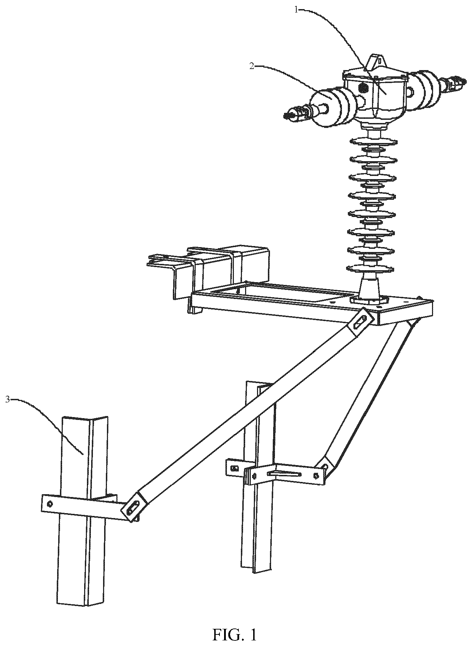

OPGW optoelectrical separation apparatus is usually modified on the basis of optical phase conductor (OPPC) splice box, such as shown in the Figure 1, composite hollow insulators 2 are set on both sides of the splice box 1. The OPGW optical fiber can pass through the hollow insulators 2 to realize optical fiber splicing inside the box body, thereby achieving direct insulation between OPGW and OPGW and between OPGW and the tower, while ensuring the connection of optical signals.

However, in the prior art, during the construction process of the OPGW optoelectrical separation apparatus, misoperation may easily occur, causing the optical fiber stainless steel unit to extend into the interior of the hollow insulators 2 and further into the interior of the splice box 1 from the interior of the hollow insulators 2, which may easily lead to the insulation failure of the hollow insulators 2.

CN102393554A discloses a high voltage isolation insulation optical cable joint box comprising an optical cable fixing clamp, a composite insulator, a sealing device, a discharge gap device, a connection sleeve, an optical fiber protection pipe and an optical fiber splice box, where the composite insulator is provided with an insulator core bar out of which a petticoat is arranged; and the sealing device comprises a sealing sleeve, a rubber cone and a screw cap.

CN201229426Y discloses an optical cable joint box of an optical fiber compound overhead earth wire, which comprises a box cover, a base and an optical accommodating disc, where the optical accommodating disc is installed in the cavity which is formed by mutually connecting the box cover and the base; an optical fiber access hole and a mounting mechanism are arranged on the base, and an optical fiber sealing device is installed on the optical access hole.

CN117706711A discloses a modularized cap type OPGW (Optical Fiber Composite Overhead Ground Wire) insulation connection device and system.

### SUMMARY

The present invention is set out in the appended set of claims. The main purpose of the present application is to provide an optoelectrical separation apparatus and optoelectrical separation splicing system for optical fiber composite overhead ground wires to solve the problem of insulation failure of the hollow insulator in the optoelectrical separation apparatus for the optical fiber composite overhead ground wires in the prior art.

In order to achieve the above object, the present application provides an optoelectrical separation apparatus for optical fiber composite overhead ground wires in accordance with claim 1.

Further, the fixing piece may include:
a connecting sleeve, located at an outer periphery of the installing cylinder, the connecting sleeve is threadedly connected with the installing cylinder; and a binder plate, connected with the connecting sleeve, the binder plate is located on one side of the installing cylinder away from the flange piece.

Further, the insulating part may be sealingly connected with the connecting part, and the internal through hole of the insulating part filled with insulating sealing material.

Further, there may be two insulating parts, each insulating part arranged obliquely with respect to the splice box, and the two insulating parts arranged in a shape of Chinese character " 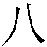 ".

Further, the connecting part may include:
a connecting main body, having an assembly through hole communicated with the internal through hole, a first end of the connecting main body is sealingly connected with the insulating part, and a second end of the connecting main body is installed on the splice box; and a sealing body, sealingly fitted with assembly through hole, the sealing body is provided with a second through hole for sealing installation of the optical fiber.

Further, the connecting part may also include a protective piece having an installing through hole, one end of the protective piece is inserted through the second through hole and is sealingly fitted with the second through hole, and the other end of the protective piece extends into the accommodating cavity through the threading port.

The present application further provides an optoelectrical separation splicing system for optical fiber composite overhead ground wires, including: at least two optical fiber cables, each including at least one optical fiber unit for transmitting a signal, the optical fiber unit includes a steel pipe and a plurality of optical fibers located within the steel pipe; and the above-mentioned optoelectrical separation apparatus for the optical fiber composite overhead ground wires, the at least two optical fiber cables are provided correspondingly to the at least two insulating parts, and the optical fibers of the at least two optical fiber cables are spliced within the splice box.

Further, the optoelectrical separation apparatus for the optical fiber composite overhead ground wires may further include a humidity sensor and/or an inclination sensor located within the accommodating cavity, at least one of the humidity sensor and the inclination sensor is connected with one optical fiber of the plurality of optical fibers.

By applying the technical solution of the present application, by providing the cylindrical structure with an arc segment, even if the cylindrical structure is arranged with a bend, when the optical fiber unit with the steel pipe is inserted into the cylindrical structure, the turning section (arc segment) of the cylindrical structure can block the rigid steel pipe, while the bendable optical fiber can enter the internal through hole of the insulating part through the arc segment of the cylindrical structure, that is, the optical fiber can only pass through the arc segment. In this way, misoperation of inserting the steel pipe of the optical fiber unit into the internal through hole of the insulating part can be avoided, thereby avoiding a short circuit inside the insulating part and avoiding the problem of insulation failure of the insulating part, and also serve the purpose of error prevention during construction and installation.

### BRIEF DESCRIPTION OF DRAWINGS

The description drawings that constitute a part of the present application are used to provide a further understanding of the present application, the illustrative embodiments of the present application and their descriptions are used to explain the present application and do not constitute an improper limitation of the present application. In the drawings:
FIG. 1 shows a schematic structural diagram of an optoelectrical separation apparatus for optical fiber composite overhead ground wires in the prior art.
FIG. 2 shows a schematic structural diagram of an embodiment of an optical and optoelectrical separation apparatus for optical fiber composite overhead ground wires of the present application.
FIG. 3 shows a partially enlarged view of the optoelectrical separation apparatus for the optical fiber composite overhead ground wires in FIG. 2.
FIG. 4 shows another partially enlarged view of the optoelectrical separation apparatus for the optical fiber composite overhead ground wires in FIG. 2.
FIG. 5 shows a section view of a cylindrical structure of the optoelectrical separation apparatus for the optical fiber composite overhead ground wires in FIG. 2.
FIG. 6 shows a schematic structural diagram of the cylindrical structure of the optoelectrical separation apparatus for the optical fiber composite overhead ground wires in FIG. 2.
FIG. 7 shows a schematic structural diagram from one angle of a clamping member of the optoelectrical separation apparatus for optical fiber composite overhead ground wires in FIG. 2.
FIG. 8 shows a schematic structural diagram from another angle of the clamping member in FIG. 7.
FIG. 9 shows an installation schematic diagram of an optoelectrical separation splicing system for optical fiber composite overhead ground wires of the present application.

The above drawings include the following reference signs:
5. iron tower; 101. optical fiber; 102. optical fiber unit; 103. optical fiber cable; 10. splice box; 20. insulating part; 30. connecting part; 31. connecting main body; 32. sealing body; 33. protective piece; 40. clamping member; 41. flange piece; 42. clamping piece; 43. installing cylinder; 50. installing member; 51. cylindrical structure; 52. sealing piece; 53. fixing piece; 531. connecting sleeve; 532. binder plate.

### DESCRIPTION OF EMBODIMENTS

The present application will be described in detail below with reference to the accompanying drawings and embodiments.

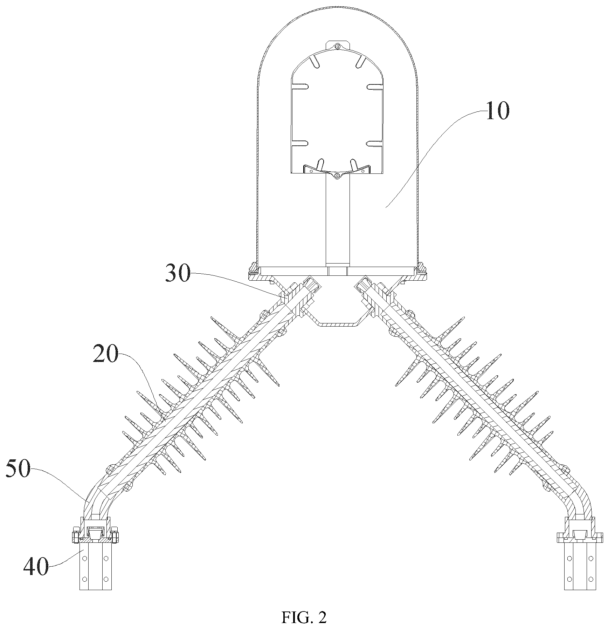

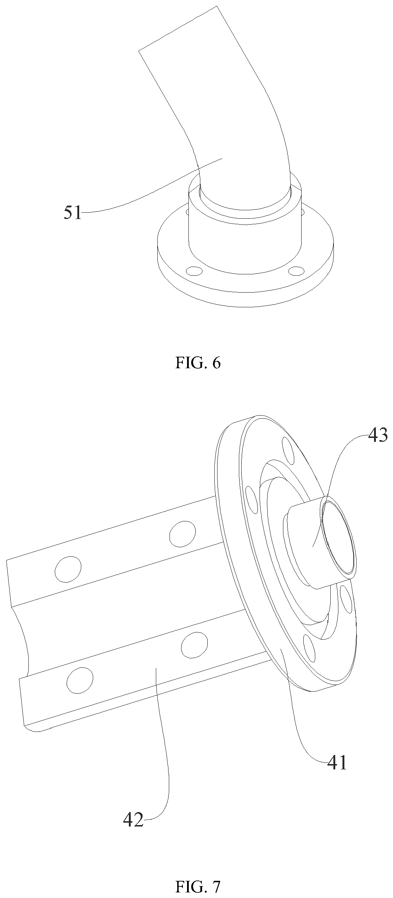

As shown in FIGS. 2 to 9, an embodiment of the present application provides an optoelectrical separation apparatus for optical fiber composite overhead ground wires. The optoelectrical separation apparatus for the optical fiber composite overhead ground wires includes a splice box 10 and at least two insulating parts 20. The splice box 10 has an accommodating cavity and a threading port communicated with the accommodating cavity, and the threading port is configured for an optical fiber 101 to pass through; each of the at least two insulating parts 20 has an internal through holes for an optical fiber 101, opposite ends of each insulating part 20 are respectively provided with a connecting part 30 and an installing part along an axis of the internal through hole, the insulating part 20 is connected with a splice box 10 via the connecting part 10, and the connecting part 30 is configured to sealingly install the optical fiber 101; the installing part includes a clamping member 40 and an installing member 50, the clamping member 40 is configured to clamp an optical fiber cable 103, one end of the installing member 50 is sealingly connected with the clamping member 40, and the other end of the installing member 50 is sealingly connected with the insulating part 20, the installing member 50 includes a cylindrical structure 51 configured to being capable of sealingly installing the optical fiber unit 102, an interior of the cylindrical structure 51 is communicated with the internal through hole, and the cylindrical structure 51 has an arc segment.

In the above technical solution, since the cylindrical structure 51 is provided with an arc segment, even if the cylindrical structure 51 is arranged with a bend, when the optical fiber unit 102 with the steel pipe is inserted into the cylindrical structure 51, the turning section (arc segment) of the cylindrical structure 51 can block the rigid steel pipe, while the bendable optical fiber can enter the internal through hole of the insulating part 20 through the arc segment of the cylindrical structure 51, that is, the optical fiber can only pass through the arc segment. In this way, misoperation of inserting the steel pipe of the optical fiber unit 102 into the internal through hole of the insulating part 20 can be avoided, thereby avoiding a short circuit inside the insulating part 20 and avoiding the problem of insulation failure of the insulating part 20, and also serve the purpose of error prevention during construction and installation.

Specifically, in the embodiment of the present application, the insulating part 20 includes a fiberglass core rod and a silicone rubber sheath located on an outer periphery of the fiberglass core rod, and the fiberglass core rod is provided with the above-mentioned internal through hole. In this way, it can serve to provide insulation.

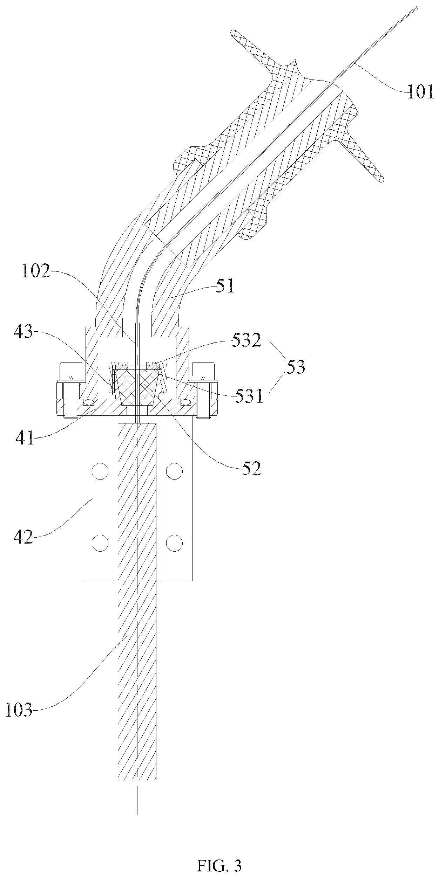

As shown in FIG. 3, in the embodiment of the present application, the clamping member 40 has a clamping channel communicated with the interior of the cylindrical structure 51, and the installing member 50 further includes a sealing piece 52 and a fixing piece 53. Wherein, the sealing piece 52 is sealingly fitted with a section of the clamping channel, and the sealing piece 52 is provided with a first through hole that is sealingly fitted with the optical fiber unit 102; the fixing piece 53 is located within the cylindrical structure 51, the fixing piece 53 is connected with the clamping member40, and the fixing piece 53 is configured to press the sealing piece 52 tightly within the first through hole.

Through the above arrangement, the clamping channel can clamp the optical fiber cable 103 to fix the optical fiber cable 103, and by providing the sealing piece 52 and the fixing piece 53, moisture or dust can be prevented from entering the interior of the cylindrical structure 51 through the clamping channel, thereby avoiding interference with the signal transmission of the optical fiber.

As shown in FIGS. 3, 7 and 8, in the embodiment of the present application, the clamping member 40 includes a flange piece 41, two clamping pieces 42 an installing cylinder 43. The flange piece 41 is sealingly connected with the cylindrical structure 51; the two clamping pieces 42 are configured to clamp the optical fiber cables 103, each clamping piece 42 is connected with one side of the flange piece 41 away from the cylindrical structure 51; and the installing cylinder 43 is connected with the flange piece 41, the installing cylinder 43 is located inside the cylindrical structure 51, the sealing piece 52 is located within the installing cylinder 43 and sealingly fitted with the installing cylinder 43, and the fixing piece 53 is connected with the installing cylinder 43.

Through the above arrangement, the flange piece 41 is sealingly connected with the cylindrical structure 51, which can fix the clamping member 40 on the installing member 50, and the moisture or dust can be prevented from entering the interior of the cylindrical structure 51 through the gap between the flange piece 41 and the cylindrical structure 51, thereby avoiding interference with the signal transmission of the optical fiber.

Specifically, as shown in FIGS. 3, 5 and 6, in the embodiment of the present application, the cylindrical structure 51 includes a sleeve and a flange plate connected with the sleeve. A sealing ring is provided between the flange plate and the flange piece 41, and the flange plate and the flange piece 41 are connected by bolts to achieve a sealed connection between the flange piece 41 and the cylindrical structure 51. The flange piece 41 is also a flange plate.

Specifically, in the embodiment of the present application, one clamping piece 42 of the two clamping pieces 42, the flange piece 41 and the installing cylinder 43 are integrally formed, and the other clamping piece 42 of the two clamping pieces 42 is connected with the one clamping piece 42 by bolts, so that the two clamping pieces 42 can tightly grip the optical cable 103, and it is easy to process the above structure.

Specifically, as shown in FIG. 3, in the embodiment of the present application, an end of the cylindrical structure 51 is connected with an outer periphery of the fiberglass core rod, and a portion of a silicone rubber sheath is connected with an outer periphery of the end of the cylindrical structure 51 to increase the connection stability between the cylindrical structure 51 and the insulating part 20.

Specifically, as shown in FIG. 3, in the embodiment of the present application, the sealing piece 52 is a tapered rubber piece, and the installing cylinder 43 has a tapered hole. An inner diameter of the tapered hole gradually increases in a direction from the clamping member 42 to the cylindrical structure 51, and the tapered rubber piece is sealingly fitted with the tapered hole. In this way, the sealing effect can be improved.

As shown in FIG. 3, in the embodiment of the present application, the fixing piece 53 includes a connecting sleeve 531 and a binder plate 532. The connecting sleeve 531 is located at an outer periphery of the installing cylinder 43, and the connecting sleeve 531 is threadedly connected with the installing cylinder 43; and the binder plate 532 is connected with the connecting sleeve 531, and the binder plate 532 is located on one side of the installing cylinder 43 away from the flange piece 41.In this way, the connection between the fixing piece 53 and the installing cylinder 43 can be achieved, and the binder plate 532 can be provided to press the sealing piece 52 within the installing cylinder 43 to prevent the sealing piece 52 from falling off, thereby avoiding sealing failure.

Specifically, as shown in FIG. 3, in the embodiment of the present application, the installing member 50 further includes a wear-resistant piece, and the wear-resistant piece is located between the sealing piece 52 and the binder plate 532 to prevent the fixing piece 53 from damaging the sealing piece 52 during the installation process. The wear-resistant piece is preferably a wear-resistant gasket, and the wear-resistant gasket is provided with an avoidance through hole.

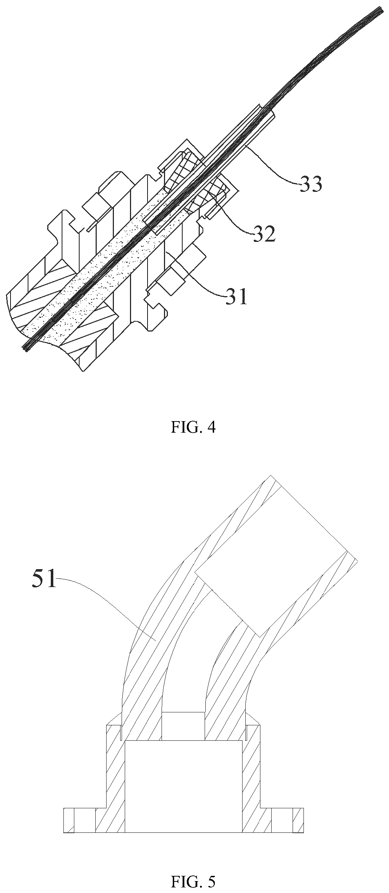

The internal through hole needs to pass through the optical fiber, from an end of the insulating part 20 connected with the installing part to an end of the insulating part 20 connected with the connecting part 30, a creepage distance of the internal through hole must be much smaller than a creepage distance of the silicone rubber sheath, which easily leads to internal breakdown of the insulating part 20. Therefore, as shown in FIG. 4, in the embodiment of the present application, the insulating part 20 is sealingly connected with the connecting part 30, and the internal through hole of the insulating part 20 is filled with insulating sealing material.

Through the above arrangement, the insulating sealing material is injected after the internal through hole passes through the optical fiber, which not only protects the optical fiber well, but also improves the internal insulation performance of the insulating part 20, thereby preventing internal breakdown of the insulating part 20.

Preferably, in the embodiment of the present application, the insulating sealing material is fiber paste, and the fiber paste has good viscosity, thereby preventing the fiber paste from overflowing from the protective piece 33.

In the prior art, a hollow insulator 2 is usually arranged horizontally, in this way, once the sealing fails, there may be a risk of rainwater backflow. Therefore, as shown in the FIG. 2, in the embodiment of the present application, there are two insulating parts 20, each insulating part 20 is arranged obliquely with respect to the splice box 10, and the two insulating parts 20 are arranged in a shape of Chinese character " 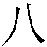 ".

In the above technical solution, by arranging the two insulating parts 20 in a shape of Chinese character " 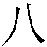 ", it not only avoids the issue of rainwater backflow at the optical fiber unit 102 of the optical cable 103, but also avoids the impact of rainwater backflow into the interior of the insulating part 20, which could affect optical fiber signal transmission, and further maintains an insulating distance between the two optical fiber cables 103.

As shown in FIG. 4, in the embodiment of the present application, the connecting part 30 includes a connecting main body 31 and a sealing body 32. The connecting main body 31 has an assembly through hole communicated with the internal through hole, a first end of the connecting main body 31 is sealingly connected with the insulating part 20, and a second end of the connecting main body 31 is installed on the splice box 10; and the sealing body 32 is sealingly fitted with assembly through hole, the sealing body 32 is provided with a second through hole for sealing installation of the optical fiber 101.

Through the above arrangement, it can not only allow the optical fiber 101 to be passed through, but the insulating part 20 can also be fixed on the splice box 10 via the connecting part 30, and moisture or dust can also be prevented from entering the interior of the insulating part 20 through the assembly through hole, thereby avoiding affecting the optical fiber signal transmission.

Specifically, as shown in FIG. 2, in the embodiment of the present application, the optoelectrical separation apparatus for the optical fiber composite overhead ground wires further includes an installing bracket connected with the splice box 10, and each connecting part 30 is connected with the installing bracket, so that the connecting part 30 is installed on the splice box 10 through the installing bracket. The installing bracket includes three installing segments that are connected and arranged at an angle to form a V-shaped structure. In this way, the two insulating parts 20 can be better arranged in a shape of Chinese character " 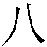 ", and the three installing segments are provided with an installation interface fitted with the connecting main body 31. Preferably, as shown in FIG. 2, in this embodiment, there are two connecting parts 30, and the connecting parts 30 are installed on two installing segments of the three installing segments.

Preferably, in the embodiment of the present application, the sealing body 32 is a tapered rubber body, and the assembly through hole on the second end of the connecting main body 31 is tapered. An outer diameter of the tapered rubber body gradually increases in a direction from the insulating part 20 to the connecting part 30. In this way, the sealing effect can be improved.

Preferably, in the embodiment of the present application, the connecting main body 31 and/or the cylindrical structure 51 is made of aluminum material.

As shown in FIG. 4, in the embodiment of the present application, the connecting part 30 further includes a protective piece 33, the protective piece 33 has an installing through hole, one end of the protective piece is inserted through the second through hole and is sealingly fitted with the second through hole, and the other end of the protective piece extends into the accommodating cavity through the threading port. In this way, the protective piece 33 can protect the optical fiber 101, which prevents the tapered rubber body from squeezing the optical fiber 101.

Preferably, in the embodiment of the present application, the protective piece 33 is a protective pipe.

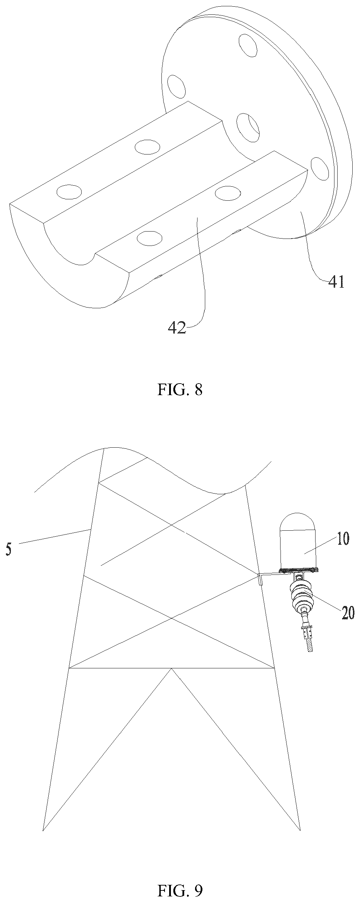

As shown in FIG. 8, the embodiment of the present application provides an optoelectrical separation splicing system for optical fiber composite overhead ground wires, including: at least two optical fiber cables 103, each including at least one optical fiber unit 102 for transmitting a signal, the optical fiber unit 102 includes a steel pipe and a plurality of optical fibers 101 located within the steel pipe; and the above-mentioned optoelectrical separation apparatus for the optical fiber composite overhead ground wires, the at least two optical fiber cables 103 are provided correspondingly to the at least two insulating parts 20, and the optical fibers 101 of the at least two optical fiber cables 103 are spliced within the splice box 10. The above optoelectrical separation splicing system for the optical fiber composite overhead ground wires has all the advantages of the above optoelectrical separation apparatus for the optical fiber composite overhead ground wires, and will not be described again here.

Preferably, the steel pipe is made of stainless steel material.

In the prior art, a monitoring component of the optoelectrical separation device for the optical fiber composite overhead ground wires is generally an active sensor that requires an external power supply and performs transmission of sensor data through a public network. However, if the optoelectrical separation device for the optical fiber composite overhead ground wires is installed in an ice-covered area in the wild where is not within a coverage area of a public network signal, it will be difficult to monitor a state of the splice box. Moreover, the optical fiber composite overhead ground wires are in a high voltage state when ice melts. If the sensor is connected with an external power supply, there will be a safety risk.

Therefore, in the embodiment of the present application, the optoelectrical separation apparatus for the optical fiber composite overhead ground wires further includes a humidity sensor and/or an inclination sensor located within the accommodating cavity, and at least one of the humidity sensor and the inclination sensor is connected with one optical fiber 101 of the plurality of optical fibers 101. In this way, the optical fiber inside the splice box 10 can be used to monitor the state of the splice box 10 using optical fiber sensing to monitor an inclination angle of the splice box 10 and a humidity inside the splice box, thereby avoiding an external power supply and thereby reducing a safety risk.

It should be noted that, compared with the prior art in which the support frame 3 is used to install the optoelectrical separation apparatus for the optical fiber composite overhead ground wires on the iron tower 5 through a post insulator, in the present embodiment, the splice box 10 is directly installed on the iron tower 5, which can reduce the number of the post insulator, and also lighten a weight of the optoelectrical separation apparatus for the optical fiber composite overhead ground wires, thereby eliminating the need to build an installation platform (support frame 3) to reduce construction difficulty.

It should be noted that, as shown in FIG. 9, in the embodiment of the present application, it is necessary to maintain mutual insulation between two optical fiber composite overhead ground wires, while also ensuring insulation between the two optical fiber composite overhead ground wires and the iron tower 5. Therefore, a composite insulator of the optoelectrical separation apparatus and a livepart of the splice box have an insulation distance from the iron tower 5 respectively, and the insulation distance should meet the OPGW de-icing voltage requirements.

It should be noted that, the specific installation steps of the optical fiber composite overhead ground wired are as follows.

First, strip the optical fiber composite overhead ground wires to a length greater than 1.5 m, and strip the steel pipe for about 40-50 mm from an end face of an aluminum-clad steel wire to expose the optical fiber.

Second, pass the optical fiber through the clamping channel of the clamping member and fix it in the clamping member.

Third, put a tapered rubber piece on the outer cover of the steel pipe and then tighten the fixing piece 53 to squeeze the rubber to achieve sealing.

Fourth, place a sealing ring between the flange plate and the flange piece 41, pass the optical fiber through the internal through hole of the insulating part 20, and fixedly connect the flange plate and the flange piece 41 through bolts.

Fifth, insert the optical fiber into the protective piece 33 and fix the protective piece at the connecting part 30 with a tapered rubber body and a sealing nut.

Sixth, splice and fix the optical fiber. The optical fiber of the sensor also needs to be spliced.

Seventh, place an O-ring in the sealing position of the splice box and seal the splice box through bolts.

From the above description, it can be seen that the above-mentioned embodiments of the present application achieve the following technical effects: by providing the cylindrical structure with an arc segment, even if the cylindrical structure is arranged with a bend, when the optical fiber unit with the steel pipe is inserted into the cylindrical structure, the turning section (arc segment) of the cylindrical structure can block the rigid steel pipe, while the bendable optical fiber can enter the internal through hole of the insulating part through the arc segment of the cylindrical structure, that is, the optical fiber can only pass through the arc segment. In this way, misoperation of inserting the steel pipe of the optical fiber unit into the internal through hole of the insulating part can be avoided, thereby avoiding a short circuit inside the insulating part and avoiding the problem of insulation failure of the insulating part, and also serve the purpose of error prevention during construction and installation.

The above-mentioned are only preferred embodiments of the present application and are not intended to limit the present application. For those skilled in the art, the present application may have various modifications and changes.

## Claims

1. A optoelectrical separation apparatus for optical fiber composite overhead ground wires, comprising:
a splice box (10), having an accommodating cavity and a threading port communicated with the accommodating cavity, the threading port is configured for an optical fiber (101) to pass through; and
at least two insulating parts (20), each having an internal through hole for the optical fiber (101) to pass through, opposite ends of each insulating part (20) are respectively provided with a connecting part (30) and an installing part along an axis of the internal through hole, the insulating part (20) is connected with the splice box (10) via the connecting part (30), and the connecting part (30) is configured to sealingly install the optical fiber (101);
the installing part comprises a clamping member (40) and an installing member (50), the clamping member (40) is configured to clamp an optical fiber cable (103), one end of the installing member (50) is sealingly connected with the clamping member (40), and the other end of the installing member (50) is sealingly connected with the insulating part (20), the installing member (50) comprises a cylindrical structure (51) configured to being capable of sealingly installing an optical fiber unit (102), an interior of the cylindrical structure (51) is communicated with the internal through hole, and the cylindrical structure (51) has an arc segment;
the clamping member (40) has a clamping channel communicated with the interior of the cylindrical structure (51), and the installing member (50) further comprises:
a sealing piece (52), sealingly fitted with a section of the clamping channel, the sealing piece (52) is provided with a first through hole that is sealingly fitted with the optical fiber unit (102); and
a fixing piece (53), located within the cylindrical structure (51), the fixing piece (53) is connected with the clamping member (40), and the fixing piece (53) is configured to press the sealing piece (52) tightly within the first through hole;
wherein the optical fiber cable (103) comprises at least one optical fiber unit (102), and the optical fiber unit (102) comprises a steel pipe and a plurality of optical fibers (101) located within the steel pipe;
wherein the clamping member (40) comprises:
a flange piece (41), sealingly connected with the cylindrical structure (51);
two clamping pieces (42), configured to clamp the optical fiber cable (103), each clamping piece (42) is connected with one side of the flange piece (41) away from the cylindrical structure (51); and
an installing cylinder (43), connected with the flange piece (41), the installing cylinder (43) is located inside the cylindrical structure (51), the sealing piece (52) is located within the installing cylinder (43) and sealingly fitted with the installing cylinder (43), and the fixing piece (53) is connected with the installing cylinder (43).

2. The optoelectrical separation device for the optical fiber composite overhead ground wires according to claim 1, wherein the fixing piece (53) comprises:
a connecting sleeve (531), located at an outer periphery of the installing cylinder (43), the connecting sleeve (531) is threadedly connected with the installing cylinder (43); and
a binder plate (532), connected with the connecting sleeve (531), the binder plate (532) is located on one side of the installing cylinder (43) away from the flange piece (41).

3. The optoelectrical separation apparatus for the optical fiber composite overhead ground wires according to claim 1 or 2, wherein the insulating part (20) is sealingly connected with the connecting part (30), and the internal through hole of the insulating part (20) is filled with insulating sealing material.

4. The optoelectrical separation apparatus for the optical fiber composite overhead ground wires according to claim 1 or 2, wherein there are two insulating parts (20), each insulating part (20) is arranged obliquely with respect to the splice box (10), and the two insulating parts (20) are arranged in a shape of Chinese character " 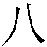 ".

5. The optoelectrical separation apparatus for the optical fiber composite overhead ground wires according to claim 1 or 2, wherein the connecting part (30) comprises:
a connecting main body (31), having an assembly through hole communicated with the internal through hole, a first end of the connecting main body (31) is sealingly connected with the insulating part (20), and a second end of the connecting main body (31) is installed on the splice box (10); and
a sealing body (32), sealingly fitted with assembly through hole, the sealing body (32) is provided with a second through hole for sealing installation of the optical fiber (101).

6. The optoelectrical separation apparatus for the optical fiber composite overhead ground wires according to claim 5, wherein the connecting part (30) further comprises a protective piece (33) having an installing through hole, one end of the protective piece (33) is inserted through the second through hole and is sealingly fitted with the second through hole, and the other end of the protective piece (33) extends into the accommodating cavity through the threading port.

7. An optoelectrical separation splicing system for optical fiber composite overhead ground wires, comprising:
at least two optical fiber cables (103), each comprising at least one optical fiber unit (102) for transmitting a signal, the optical fiber unit (102) comprises a steel pipe and a plurality of optical fibers (101) located within the steel pipe; and
the optoelectrical separation apparatus for the optical fiber composite overhead ground wires according to any one of claims 1 to 6, the at least two optical fiber cables (103) are provided correspondingly to the at least two insulating parts (20), and the optical fibers of the at least two optical fiber cables (103) are spliced within the splice box (10).

8. The optoelectrical separation splicing system for the optical fiber composite overhead ground wires according to claim 7, wherein the optoelectrical separation apparatus for the optical fiber composite overhead ground wires further comprises a humidity sensor and/or an inclination sensor located within the accommodating cavity, at least one of the humidity sensor and the inclination sensor is connected with one optical fiber (101) of the plurality of optical fibers (101).

## Patentansprüche

1. Eine optoelektrische Trenneinrichtung für optische Faserverbund-Freileitungserdungsdrähte, umfassend:
eine Spleißbox (10), die einen Aufnahmeraum und eine mit dem Aufnahmeraum in Verbindung stehende Einführöffnung aufweist, wobei die Einführöffnung für den Durchtritt einer optischen Faser (101) ausgelegt ist; und
mindestens zwei Isolierteile (20), die jeweils eine innere Durchgangsbohrung für den Durchtritt der optischen Faser (101) aufweisen, wobei die gegenüberliegenden Enden jedes Isolierteils (20) jeweils mit einem Verbindungsteil (30) und einem Montageteil entlang einer Achse der inneren Durchgangsbohrung versehen sind, das Isolierteil (20) über das Verbindungsteil (30) mit der Spleißbox (10) verbunden ist und das Verbindungsteil (30) zur dichten Installation der optischen Faser (101) dient;
das Montageteil umfasst ein Klemmelement (40) und ein Installationselement (50), wobei das Klemmelement (40) so konfiguriert ist, dass es ein Glasfaserkabel (103) klemmt, ein Ende des Installationselements (50) dichtend mit dem Klemmelement (40) verbunden ist und das andere Ende des Installationselements (50) dichtend mit dem Isolierteil (20) verbunden ist, das Installationselement (50) eine zylindrische Struktur (51) umfasst, die so konfiguriert ist, dass sie eine Glasfasereinheit (102) dichtend installieren kann, ein Innenraum der zylindrischen Struktur (51) mit der inneren Durchgangsbohrung in Verbindung steht, und die zylindrische Struktur (51) ein Bogensegment aufweist;
das Klemmelement (40) weist einen mit dem Inneren der zylindrischen Struktur (51) in Verbindung stehenden Klemmkanal auf, und das Installationselement (50) umfasst ferner:
ein Dichtungsstück (52), das dichtend mit einem Abschnitt des Klemmkanals verbunden ist, wobei das Dichtungsstück (52) eine erste Durchgangsbohrung aufweist, die dichtend mit der Glasfasereinheit (102) verbunden ist; und
ein Befestigungselement (53), das sich innerhalb der zylindrischen Struktur (51) befindet, wobei das Befestigungselement (53) mit dem Klemmelement (40) verbunden und so konfiguriert ist, dass es das Dichtungsstück (52) fest in die erste Durchgangsbohrung drückt;
wobei das Glasfaserkabel (103) mindestens eine Glasfasereinheit (102) umfasst und die Glasfasereinheit (102) ein Stahlrohr und eine Vielzahl von optischen Fasern (101) umfasst, die sich innerhalb des Stahlrohrs befinden;
wobei das Klemmelement (40) Folgendes umfasst:
ein Flanschteil (41), das dichtend mit der zylindrischen Struktur (51) verbunden ist;
zwei Klemmstücke (42), die so konfiguriert sind, dass sie das Glasfaserkabel (103) klemmen, wobei jedes Klemmstück (42) mit einer Seite des Flanschteils (41) verbunden ist, die von der zylindrischen Struktur (51) abgewandt ist; und
einen Montagezylinder (43), der mit dem Flanschteil (41) verbunden ist, sich innerhalb der zylindrischen Struktur (51) befindet, das Dichtungsstück (52), das sich innerhalb des Montagezylinders (43) befindet und dichtend mit dem Montagezylinder (43) verbunden ist, und das Befestigungselement (53), das mit dem Montagezylinder (43) verbunden ist.

2. Die optoelektrische Trennvorrichtung für die optischen Faserverbund-Freileitungserdungsdrähte nach Anspruch 1, wobei das Befestigungselement (53) Folgendes umfasst:
eine Verbindungshülse (531), die sich am Außenumfang des Montagezylinders (43) befindet, wobei die Verbindungshülse (531) mit dem Montagezylinder (43) verschraubt ist; und
eine Binderplatte (532), die mit der Verbindungshülse (531) verbunden ist, wobei sich die Binderplatte (532) auf einer Seite des Montagezylinders (43) entfernt vom Flanschteil (41) befindet.

3. Die optoelektrische Trenneinrichtung für die optischen Faserverbund-Freileitungserdungsdrähte nach Anspruch 1 oder 2, wobei das Isolierteil (20) dichtend mit dem Verbindungsteil (30) verbunden ist und die innere Durchgangsbohrung des Isolierteils (20) mit isolierendem Dichtungsmaterial gefüllt ist.

4. Die optoelektrische Trenneinrichtung für die optischen Faserverbund-Freileitungserdungsdrähte nach Anspruch 1 oder 2, wobei zwei Isolierteile (20) vorhanden sind, die jeweils schräg zur Spleißbox (10) angeordnet sind und die beiden Isolierteile (20) die Form des chinesischen Schriftzeichens " 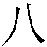 " aufweisen.

5. Die optoelektrische Trenneinrichtung für die optischen Faserverbund-Freileitungserdungsdrähte nach Anspruch 1 oder 2, wobei das Verbindungsteil (30) Folgendes umfasst:
einen Verbindungskörper (31) mit einer Montage-Durchgangsbohrung, die mit der inneren Durchgangsbohrung in Verbindung steht, wobei ein erstes Ende des Verbindungskörpers (31) dichtend mit dem Isolierteil (20) verbunden ist und ein zweites Ende des Verbindungskörpers (31) auf der Spleißbox (10) montiert ist; und
einen Dichtungskörper (32), der dichtend mit der Montage-Durchgangsbohrung verbunden ist und mit einer zweiten Durchgangsbohrung zur dichten Installation der optischen Faser (101) ausgestattet ist.

6. Die optoelektrische Trenneinrichtung für die optischen Faserverbund-Freileitungserdungsdrähte nach Anspruch 5, wobei das Verbindungsteil (30) ferner ein Schutzteil (33) mit einer Installations-Durchgangsbohrung umfasst, wobei ein Ende des Schutzteils (33) durch die zweite Durchgangsbohrung eingeführt und mit dieser dichtend verbunden ist und das andere Ende des Schutzteils (33) durch die Einführöffnung in den Aufnahmeraum hineinragt.

7. Ein optoelektrisches Trenn- und Spleißsystem für optische Faserverbund-Freileitungserdungsdrähte, umfassend:
mindestens zwei Glasfaserkabel (103), die jeweils mindestens eine Glasfasereinheit (102) zur Signalübertragung umfassen, wobei die Glasfasereinheit (102) ein Stahlrohr und eine Vielzahl von optischen Fasern (101) umfasst, die sich innerhalb des Stahlrohrs befinden; und
die optoelektrische Trenneinrichtung für die optischen Faserverbund-Freileitungserdungsdrähte nach einem der Ansprüche 1 bis 6, wobei die mindestens zwei Glasfaserkabel (103) den mindestens zwei Isolierteilen (20) entsprechend vorgesehen sind und die optischen Fasern der mindestens zwei Glasfaserkabel (103) innerhalb der Spleißbox (10) gespleißt sind.

8. Das optoelektrische Trenn- und Spleißsystem für die optischen Faserverbund-Freileitungserdungsdrähte nach Anspruch 7, wobei die optoelektrische Trenneinrichtung für die optischen Faserverbund-Freileitungserdungsdrähte ferner einen Feuchtigkeitssensor und/oder einen Neigungssensor umfasst, der sich innerhalb des Aufnahmeraums befindet, wobei mindestens einer von dem Feuchtigkeitssensor und dem Neigungssensor mit einer optischen Faser (101) aus der Vielzahl der optischen Fasern (101) verbunden ist.

## Revendications

1. Appareil de séparation optoélectronique pour des fils de terre aériens composites à fibres optiques, comprenant :
un boîtier d'épissure (10), comportant une cavité d'accueil et un port de filetage communiquant avec la cavité d'accueil, le port de filetage étant configuré pour faire passer une fibre optique (101) ; et
au moins deux parties isolantes (20), chacune ayant un trou traversant interne pour le passage de la fibre optique (101), les extrémités opposées de chaque partie isolante (20) sont respectivement pourvues d'une partie de connexion (30) et d'une partie d'installation le long d'un axe du trou traversant interne, la partie isolante (20) est connectée au boîtier d'épissure (10) via la partie de connexion (30), et la partie de connexion (30) est configurée pour installer de manière étanche la fibre optique (101) ;
la partie d'installation comprend un élément de serrage (40) et un élément d'installation (50), l'élément de serrage (40) est configuré pour serrer un câble à fibre optique (103), une extrémité de l'élément d'installation (50) est connectée de manière étanche à l'élément de serrage (40), et l'autre extrémité de l'élément d'installation (50) est connectée de manière étanche à la partie isolante (20), l'élément d'installation (50) comprend une structure cylindrique (51) configurée pour être capable d'installer de manière étanche une unité de fibre optique (102), l'intérieur de la structure cylindrique (51) est en communication avec le trou traversant interne, et la structure cylindrique (51) présente un segment en arc ;
l'élément de serrage (40) comporte un canal de serrage communiquant avec l'intérieur de la structure cylindrique (51), et l'élément d'installation (50) comprend en outre :
une pièce d'étanchéité (52), ajustée de manière étanche à une section du canal de serrage, la pièce d'étanchéité (52) est pourvue d'un premier trou traversant qui est ajusté de manière étanche à l'unité de fibre optique (102) ; et
une pièce de fixation (53), située à l'intérieur de la structure cylindrique (51), la pièce de fixation (53) est reliée à l'élément de serrage (40), et la pièce de fixation (53) est configurée pour presser fermement la pièce d'étanchéité (52) à l'intérieur du premier trou traversant ;
dans lequel le câble à fibres optiques (103) comprend au moins une unité de fibre optique (102), et l'unité de fibre optique (102) comprend un tube en acier et une pluralité de fibres optiques (101) situées à l'intérieur du tube en acier ;
dans lequel l'élément de serrage (40) comprend :
une pièce de bride (41), reliée de manière étanche à la structure cylindrique (51) ;
deux pièces de serrage (42), configurées pour serrer le câble à fibre optique (103), chaque pièce de serrage (42) est reliée à un côté de la pièce de bride (41)à l'opposé à la structure cylindrique (51) ; et
un cylindre d'installation (43), relié à la pièce de bride (41), le cylindre d'installation (43) est situé à l'intérieur de la structure cylindrique (51), la pièce d'étanchéité (52) est située à l'intérieur du cylindre d'installation (43) et est ajustée de manière étanche avec le cylindre d'installation (43), et la pièce de fixation (53) est reliée au cylindre d'installation (43).

2. Dispositif de séparation optoélectronique pour les fils de terre aériens composites à fibres optiques selon la revendication 1, dans lequel la pièce de fixation (53) comprend :
un manchon de raccordement (531), situé sur la périphérie externe du cylindre d'installation (43), le manchon de raccordement (531) est raccordé par filetage au cylindre d'installation (43) ; et
une plaque de liaison (532), reliée au manchon de raccordement (531), la plaque de liaison (532) est située d'un côté du cylindre d'installation (43) à l'opposé de la pièce de bride (41).

3. Appareil de séparation optoélectrique pour les fils de terre aériens composites à fibres optiques selon la revendication 1 ou 2, dans lequel la partie isolante (20) est connectée de manière étanche à la partie de connexion (30), et le trou traversant interne de la partie isolante (20) est rempli de matériau d'étanchéité isolant.

4. Appareil de séparation optoélectronique pour les fils de terre aériens composites à fibres optiques selon la revendication 1 ou 2, dans lequel il y a deux parties isolantes (20), chaque partie isolante (20) est agencée obliquement par rapport au boîtier d'épissure (10), et les deux parties isolantes (20) sont agencées en forme de caractère chinois " 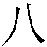 ".

5. Appareil de séparation optoélectronique pour les fils de terre aériens composites à fibres optiques selon la revendication 1 ou 2, dans lequel la partie de connexion (30) comprend :
un corps principal de connexion (31), comportant un trou traversant d'assemblage communiquant avec le trou traversant interne, une première extrémité du corps principal de connexion (31) est reliée de manière étanche à la partie isolante (20), et une seconde extrémité du corps principal de connexion (31) est installée sur le boîtier d'épissure (10) ; et
un corps d'étanchéité (32), ajusté de manière étanche avec un trou traversant d'assemblage, le corps d'étanchéité (32) est pourvu d'un second trou traversant pour une installation étanche de la fibre optique (101).

6. Appareil de séparation optoélectronique pour les fils de terre aériens composites à fibres optiques selon la revendication 5, dans lequel la partie de connexion (30) comprend en outre une pièce de protection (33) ayant un trou traversant d'installation, une extrémité de la pièce de protection (33) est insérée à travers le second trou traversant et est ajustée de manière étanche avec le second trou traversant, et l'autre extrémité de la pièce de protection (33) s'étend dans la cavité d'accueil à travers le port fileté.

7. Système d'épissure par séparation optoélectrique pour des fils de terre aériens composites à fibres optiques, comprenant :
au moins deux câbles à fibres optiques (103), chacun comprenant au moins une unité de fibre optique (102) pour transmettre un signal, l'unité de fibre optique (102) comprend un tube en acier et une pluralité de fibres optiques (101) situées à l'intérieur du tube en acier ; et
l'appareil de séparation optoélectrique pour les fils de terre aériens composites à fibres optiques selon l'une quelconque des revendications 1 à 6, les au moins deux câbles à fibres optiques (103) sont fournis en correspondance avec les au moins deux parties isolantes (20), et les fibres optiques des au moins deux câbles à fibres optiques (103) sont épissées dans le boîtier d'épissure (10).

8. Système d'épissure par séparation optoélectrique pour les fils de terre aériens composites à fibres optiques selon la revendication 7, dans lequel l'appareil de séparation optoélectrique pour les fils de terre aériens composites à fibres optiques comprend en outre un capteur d'humidité et/ou un capteur d'inclinaison situé dans la cavité d'accueil, au moins un du capteur d'humidité et du capteur d'inclinaison est connecté à une fibre optique (101) de la pluralité de fibres optiques (101).
